# EUROPÄISCHE PATENTSCHRIFT

(11) **EP 0 796 287 B1**
(45) Veröffentlichungstag und Bekanntmachung des Hinweises auf die Patenterteilung: **21.03.2001**
(21) Anmeldenummer: 95941041.6
(22) Anmeldetag: 29.11.1995
(51) Int. Cl.: C08F 279/04, C08L 51/00, C08L 55/02

(54) **VERFAHREN ZUR HERSTELLUNG KAUTSCHUKELASTISCHER PFROPFPOLYMERISATE**
PROCESS FOR THE PREPARATION OF RUBBER-ELASTIC GRAFT POLYMERS
PROCEDE POUR LA PREPARATION DES POLYMERES GREFFES CAOUTCHOUTEUX

(30) Priorität: 09.12.1994 DE 4443886
(43) Veröffentlichungstag der Anmeldung: 24.09.1997
(60) Teilanmeldung: 99118526.5
(73) Patentinhaber: BASF AKTIENGESELLSCHAFT, 67056 Ludwigshafen (DE)
(72) Erfinder: MC KEE, Graham, Edmund, D-67433 Neustadt (DE); JAHNS, Ekkehard, D-69469 Weinheim (DE); FISCHER, Wolfgang, D-67067 Ludwigshafen (DE); GÜNTHERBERG, Norbert, D-67346 Speyer (DE); ROSENAU, Bernhard, D-67434 Neustadt (DE)
(86) Internationale Anmeldenummer: EP9504688
(87) Internationale Veröffentlichungsnummer: WO9617878

(56) Entgegenhaltungen:
- EP-A- 0 164 048
- EP-A- 0 381 358
- EP-A- 0 570 773
- DE-A- 4 242 485
- FR-A- 2 311 047

## Beschreibung

Die vorliegende Erfindung betrifft ein Verfahren zur Herstellung partikelförmiger Pfropfpolymerisate, die zur Qualitätsverbesserung von makromolekularen Basismaterialien B geeignet sind, bestehend aus
a) einem Pfropfkern aus einem kautschukelastischen Polymeren, wobei der Kern einen mittleren Teilchendurchmesser von 1 bis 100 µm aufweist, und
b) einer oder mehrerer Schalen, wobei die äußere Schale Sₐ aus einem Polymerisat Pₐ besteht, welches mit dem Basismaterial B verträglich oder teilverträglich ist.

Es ist allgemein bekannt, die Schlagzähigkeit von nichtelastischen Polymeren durch Zusatz von kautschukelastischen Polymeren zu verbessern. In derartigen Mischungen bildet das nichtelastische Basismaterial, das auch als Matrix bezeichnet wird, ein Kontinuum, in welchem die kautschukelastischen Teilchen in Form diskreter Partikel eingebettet sind.

Da das kautschukelastische Polymere mit dem Basispolymeren häufig nicht verträglich ist und sich daher schlecht in das Basispolymere einarbeiten läßt, umgibt man den Kautschuk bei seiner Herstellung, wie ebenfalls allgemein bekannt ist, mit einer Pfropfhülle, deren Aufbau dem des Basispolymeren entspricht oder die mit dem Basispolymeren verträglich ist. Hierdurch werden die verarbeitungstechnischen und anwendungstechnischen Eigenschaften der schlagzäh modifizierten Mischung nochmals weiter verbessert.

In der Regel stellt man die kautschukelastischen Pfropfpolymerisate durch Emulsionspolymerisation her. Nach diesem Verfahren entstehen sehr feinteilige Polymerisate mit einem mittleren Teilchendurchmesser von 0,1 bis unter 1 µm.

Man erhält jedoch mit diesem Material nur Formmassen mit hohem Oberflächenglanz. Häufig sind jedoch mattierte Formkörper erwünscht, so daß man Mattierungsmittel wie Kieselgel oder Kreide mitverwenden muß, die allerdings die mechanischen Eigenschaften der Formmassen und der Formkörper beeinträchtigen.

Aus der EP-A 269 324 sind Pfropfpolymerisate größeren Teilchendurchmessers aus einem kautschukelastischen Kernpolymeren und einer äußeren Pfropfhülle aus einem Polymeren, welches mit dem vorgegebenen nichtelastischen Basismaterial verträglich ist, bekannt. Formmassen mit diesen lichtbrechenden Partikeln haben zwar eine matte Oberfläche, jedoch ist das Verfahren zur Herstellung der Teilchen äußerst umständlich. Hiernach werden die Polymerteilchen des Pfropfkerns, die sich bei der Emulsionspolymerisation zunächst gebildet haben, mit frisch zugegebenem Monomeren gequollen, wonach die Polymerisation fortgesetzt wird. Dieser Vorgang kann wiederholt werden, bis die gewünschte Teilchengröße erreicht ist. Schließlich werden diese Teilchen mit der Pfropfhülle versehen, die sie für die Vermischung mit dem Matrixpolymeren kompatibel macht.

Die Herstellung der kautschukelastischen Teilchen nach dem Verfahren der Emulsionspolymerisation hat überdies allgemein den Nachteil, daß die hierfür benötigten Emulgatoren zum Teil im Polymeren verbleiben und aus den hiermit gefertigten Formteilen unter Bildung unerwünschter Beläge wieder ausschwitzen.

Der Erfindung lag allgemein die Aufgabe zugrunde, den geschilderten Mängeln abzuhelfen. Speziell erstreckt sich die Aufgabe auf die Bereitstellung von kautschukelastischen partikelförmigen Pfropfpolymerisaten, mit denen die Schlagzähigkeit nichtelastischer Polymerer erhöht werden kann und die gleichzeitig die Funktion von Mattierungsmitteln erfüllen.

Demgemäß wurden die eingangs definierten kautschukelastischen partikelförmigen Pfropfpolymerisate gefunden.

Weiterhin wurde ein Verfahren zur Herstellung dieser Pfropfpolymerisate, ihre Verwendung als Mischungskomponente für Mischungen mit makromolekularen Basismaterialien, derartige Mischungen selbst und Formkörper aus solchen Mischungen gefunden.

Man erhält die erfindungsgemäßen Pfropfpolymerisate vorzugsweise wie folgt: Das flüssige Monomere bzw. flüssige Monomerengemisch M_{K}, welches zum Kernpolymeren P_{K} polymerisiert werden soll, wird mit Wasser und einem Schutzkolloid vermischt. Der Polymerisationsinitiator wird entweder ebenfalls schon jetzt oder erst nach dem Dispergieren des Monomeren, oder auch nach dem Aufheizen der Dispersion zugegeben. Aus der heterogenen Mischung bereitet man durch intensives Rühren bei hoher Geschwindigkeit eine Dispersion kleinster Monomerentröpfchen in Wasser, wofür sich Intensivmischer beliebiger Bauart eignen. Die gewünschte Teilchengröße innerhalb des definitionsgemäßen Bereiches läßt sich beispielsweise dadurch ermitteln, daß man lichtmikroskopische Aufnahmen anfertigt und die Zahl der Teilchen, die einen bestimmten Durchmesser haben, durch Auszählen ermittelt.

Man startet die Polymerisationon durch Erhitzen der Dispersion. Die Reaktion, die man nunmehr unter mäßigem Rühren, bei welchem die Tröpfchen nicht mehr weiter zerteilt werden, vornimmt, wird solange fortgesetzt, bis der Umsatz bezogen auf M_{K} über 50 %, bevorzugt über 85 % liegt.

Ist die Polymerisation des Pfropfkerns beendet, setzt man die Reaktion mit den Monomeren Mₛ, aus welchen die entsprechenden Schalen S, bestehend aus dem Polymeren Pₛ, entstehen, in an sich bekannter Weise fort. Man kann die Pfropfung aber auch bereits beginnen, wenn der Polymerisationsumsatz des Monomeren M_{K} noch unvollständig ist und über 50%, vorzugsweise über 85% liegt. In diesem Falle bilden Schale und Kern einen mehr fließenden Übergang, verglichen mit der schärferen Abgrenzung von Kern- und Schale-Polymerisat im Falle des zunächst vollständigen Umsatzes der Kernmonomeren.

Hat das Pfropfpolymer nur eine einzige Schale, was allgemein ausreichend ist, so besteht diese aus dem Material Pₐ. In manchen Fällen, vornehmlich, wenn die Pfropfkerne relativ klein sind und wenn man eine größere Menge des Kernpolymeren P_{K} in die Teilchen einbringen möchte, empfehlen sich mehrschalige Pfropfpolymerisate des Aufbaus P_{K}-Pₐ-P_{K}-Pₐ, wobei die inneren Schalen auch aus anderen Polymeren P_{X} bestehen können, um dadurch die Eigenschaften der Pfropfpolymerisate abzuwandeln und dadurch zu verbessern.

Man nimmt die Dispergierung der Monomeren M_{K} in der Regel bei einer Temperatur von 0 bis 100°C, vorzugsweise bei Raumtemperatur vor und verwendet pro Kilogramm der Monomeren in der Regel 0,5 bis 10 kg Wasser.

Die für die Stabilisierung der Dispersion geeigneten Schutzkolloide sind wasserlösliche Polymere, welche die Monomerentröpfchen und die daraus gebildeten Polymerteilchen umhüllen und auf diese Weise vor der Koagulation schützen.

Als Schutzkolloide eignen sich Cellulosederivate wie Carboxymethylcellulose und Hydroxymethylcellulose, Poly-N-Vinylpyrrolidon, Polyvinylalkohol und Polyethylenoxid, anionische Polymere wie Polyacrylsäure und kationische wie Poly-N-vinylimidazol. Die Menge dieser Schutzkolloide beträgt vorzugsweise 0,1 bis 5 Gew.-%, bezogen auf die Gesamtmasse der Monomeren M_{K}. Niedermolekulare oberflächenaktive Verbindungen, beispielsweise solche vom Typ der anionischen und kationischen Seifen, sind für die Herstellung der erfindungsgemäßen Pfropfpolymerisate in der Regel nicht geeignet, da sie zu Polymerteilchen mit geringeren Durchmessern führen, wie man sie bei der Emulsionspolymerisation erhält.

Als Polymerisationsinitiatoren eignen sich Radikalbildner, insbesondere solche, die in den Monomeren merklich löslich sind und die vorzugsweise eine Halbwertzeit von 10 Stunden haben, wenn die Temperatur zwischen 25 und 150°C liegt ("zehnstündige Halbwertszeit bei 25 bis 150°C"). In Betracht kommen beispielsweise Peroxide wie Lauroylperoxid, Peroxosulfate, t-Butylperpivalat und Azoverbindungen wie Azodiisobutyronitril. Für die Herstellung des Pfropfkerns und der Pfropfschalen ist die Verwendung verschiedener Initiatoren möglich. Die Menge der Initiatoren beträgt im allgemeinen 0,1 bis 2,5 Gew.-%, bezogen auf die Menge der Monomeren.

Weiterhin enthält die Reaktionsmischung vorzugsweise Puffersubstanzen wie Na₂HPO₄/NaH₂PO₄ oder Na-citrat/Citronensäure, um einen im wesentlichen konstant bleibenden pH-Wert einzustellen. Bei der Polymerisation, insbesondere der schalenaufbauenden Monomere Ms werden außerdem in der Regel Molekulargewichtsregler wie Ethylhexylthioglycolat oder t-Dedecylmercaptan zugefügt.

Die Polymerisationstemperatur der Monomeren M_{K} zum aus P_{K} bestehenden Kern beträgt in der Regel 25 bis 150°C, bevorzugt 50 bis 120°C. Die Pfropfung der Schalen auf den Kern wird im allgemeinen bei 25 bis 150°C, bevorzugt 50 bis 120°C vorgenommen. Die unteren Grenzwerte dieser Bereiche entsprechen den Zerfallstemperaturen der jeweils verwendeten Polymerisationsinitiatoren.

Als kautschukelastische Polymerisate P_{K} des Pfropfkernmaterials kommen vornehmlich solche in Betracht, die zu 50 bis 100 Gew.-% aus (C₂-C₃₆-Alkyl)acrylaten wie vorzugsweise n-Butylacrylat und/ oder 2-Ethylhexylacrylat aufgebaut sind. Neben diesen sog. "weichen" Monomeren eignen sich auch in Anteilen bis zu 50 Gew.-% sog. "harte" Monomere wie Methylacrylat, die (C₁-C₁₂-Alkyl)-meth-acrylate, Styrol und α-Methylstyrol, Acrylnitril und Methacrylnitril.

Solche Polymerisate erhält man mit etwa 0,1 bis 10 Gew.-% bifunktioneller oder polyfunktioneller Comonomeren, z.B. Butadien und Isopren, Divinylestern von Dicarbonsäuren wie der Bernsteinsäure und Adipinsäure, Diallyl- und Divinylethern bifunktioneller Alkohole wie dem Ethylenglycol und dem Butan-1,4-diol, Diestern der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols (Dihydrodicyclopentadienylacrylat) der Formel I 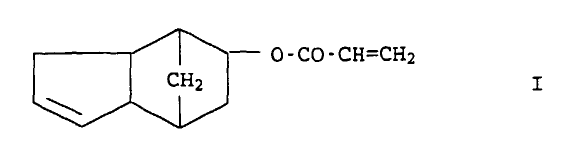 sowie die Allylester der Acrylsäure und der Methacrylsäure.

In den erfindungsgemäßen Pfropfpolymerisaten beträgt das Masseverhältnis der Summe aller Schalen zum Kern etwa 0,05:1 bis 2,5:1. Der mittlere Durchmesser der Partikel beträgt etwa 1 bis ca. 150 µm, bevorzugt 2 bis 50 µm, besonders bevorzugt 5 bis 30 µm. Der mittlere Durchmesser entspricht dem D₅₀-Wert, demzufolge 50 Gew.-% aller Teilchen einen kleineren und 50 Gew.-% einen größeren Durchmesser haben als derjenige Durchmesser, der dem D₅₀-Wert entspricht. Um die Teilchengrößenverteilung, insbesondere ihre Breite, zu charakterisieren, werden zusätzlich zum D₅₀-Wert oftmals der D₁₀- sowie der D₉₀-Wert angegeben. 10 Gew.-% aller Teilchen sind kleiner und 90 Gew.-% größer als der D₁₀-Durchmesser. Analog haben 90 Gew.-% aller Teilchen einen kleineren und 10 Gew.-% einen größeren Durchmesser als denjenigen, der dem D₉₀-Wert entspricht.

Die erfindungsgemäßen partikelförmigen Pfropfpolymerisate dienen hauptsächlich als Zusatzstoffe zu spröden thermoplastischen makromolekularen Basismaterialien B. Zum einen wird dadurch deren Schlagzähigkeit verbessert, zum anderen erhält man, hervorgerufen durch diffuse Reflexion (Streuung) des Lichtes an den großen Partikeln, Formmassen mit reduziertem Oberflächenglanz und dementsprechend matte Formteile.

Die kautschukelastischen Partikel werden in die Schmelze von B eingearbeitet, so daß die entstandene Formmasse aus der thermoplastischen Matrix B und den hierin dispergierten Pfropfpolymerisat-Partikeln aufgebaut ist. Um die kautschukelastischen Kern-Polymerisate Pₖ für die genannten Zwecke mit dem Basispolymeren verträglich zu machen, gilt als Regel, daß ihre äußere Pfropfschale Sₐ aus dem gleichen oder möglichst ähnlichen Material besteht wie das Basispolymere. Die Basis-polymeren sind Homocopolymerisate des Styrols, des Methylacrylats, der (C₁-C₄-Alkyl)-methacrylate una des Acrylnitrils, Copolymerisate dieser Monomeren und weiterer Comonomerer wie Methacrylnitril, d.h. diese Monomeren und Monomerengemische eignen sich nach Maßgabe des Aufbaus des Basispolymeren B zum Aufbau der äußeren Pfropfschale Sₐ.

Soll die äußere Schale beispielsweise verhältnismäßig hart sein, können sich Zwischenschalen aus einem weniger harten Material empfehlen. Ferner kann sich an die erste harte Pfropfschale eine Schale aus weichem Material, beispielsweise dem Kernmaterial, anschließen, wodurch sich die Eigenschaften der aus B und den Pfropfpolymerisat-Teilchen hergestellten thermoplastischen Formmassen und der daraus hergestellten Formkörper häufig noch weiter verbessern lassen. Die Zusammenhänge zwischen der Natur beider Komponenten in den Formmassen und den Materialeigenschaften entsprechen im übrigen denjenigen, wie sie für das Basismaterial und Pfropfpolymerisate bekannt sind, welche durch Emulsionspolymerisation hergestellt werden.

Dies trifft auch für andere als die genannten Basismaterialien zu: Polyester, Polyamide, Polyvinylchlorid, Polycarbonate und Polyoximethylen. In diesen Fällen lassen sich verträgliche und teilverträgliche Pfropfschalen Sₐ durch einige Vorversuche unschwer ermitteln.

Unter Verträglichkeit wird die Mischbarkeit auf molekularer Ebene verstanden. Ein Polymeres gilt mit einem anderen als verträglich, wenn im festen Zustand die Moleküle beider Polymeren statistisch verteilt sind, wenn also die Konzentration eines Polymeren entlang eines beliebigen Vektors weder zu- noch abnimmt. Umgekehrt gilt als unverträglich, wenn sich im festen Zustand zwei Phasen ausbilden, die durch eine scharfe Phasengrenze voneinander getrennt sind. Entlang eines die Phasengrenzfläche schneidenden Vektors nimmt die Konzentration des einen Polymeren schlagartig von null auf 100 % zu und die des anderen von 100 % auf null ab.

Zwischen beiden Extremen gibt es fließende Übergänge. Sie sind dadurch gekennzeichnet, daß sich zwar eine Phasengrenze ausbildet, diese jedoch unscharf ist. An der Grenzfläche findet eine gegenseitige partielle Durchdringung der beiden Phasen statt. Die Konzentration des einen Polymeren nimmt demnach entlang eines die Phasengrenze schneidenden Vektors mehr oder weniger schnell von null auf 100 % zu und die des anderen Polymeren mehr oder weniger schnell von 100 % auf null ab.

In diesem letzten Fall spricht man auch von Teilverträglichkeit, wie sie in technisch wichtigen Polymeren häufig auftritt.

Beispiele für teilverträgliche Polymere sind die Paare Polymethylmethacrylat/Copolymeres aus Styrol und Acrylnitril, Polymethylmethacrylat/Polyvinylchlorid und Polyvinylchlorid/Copolymeres aus Styrol und Acrylnitril sowie das dreiphasige System Polycarbonat/Polybutadien/Copolymeres aus Styrol und Acrylnitril (= Polycarbonat/ABS).

Näheres zum Begriff der Verträglichkeit von Polymeren und insbesondere dem sog. Löslichkeitsparameter als quantitativem Maß ist z.B. dem Polymer Handbook, Hrg. J. Brandrup und E.H. Immergut, 3. Aufl, Wiley, New York 1989, S. VII/519-VII/550 zu entnehmen.

Zur Schlagzähmodifizierung verwendet man die erfindungsgemäßen Pfropfpolymerisate in der Regel in Mengen von 1 bis 60, vorzugsweise 2 bis 45 Gew.-%, bezogen auf die Menge ihrer Mischung mit dem Basispolymeren. Formkörper aus derartigen Mischungen sind stark lichtstreuend und daher besonders matt bis lichtundurchlässig.

Ist ein Mattierungseffekt bei noch hoher Transparenz erwünscht, empfehlen sich Konzentrationen von 2 bis 10 Gew.-% an den Pfropfpolymerisaten. Da bei diesen niedrigen Konzentrationen nur eine relativ geringe Erhöhung der Schlagzähigkeit bewirkt würde, kann man in diesem Falle herkömmliche, feinstteilige kautschukelastische Modifizierungsmittel in den hierfür üblichen Mengen, abzüglich der Menge des als Mattierungsmittel eingesetzten erfindungsgemäßen Pfropfpolymerisates, mitverwenden.

Außerdem können auch opake Polymere, die bereits schlagzäh machende Modifizierungsmittel erhalten, durch Mitverwendung der erfindungsgemäßen Pfropfpolymerisate mattiert werden: mit Polybutadien modifiziertes Styrol-Acrylnitril-Copolymeres (= ABS), mit Polyalkylacrylat modifiziertes Styrol-Acrylnitril-Copolymeres (= ASA), oder mit Ethylen-Propylen-Dien-Monomer (EPDM) modifiziertes Styrol-Acrylnitril-Copolymeres (= AES).

Die erfindungsgemäßen Partikel erzielen einen Mattierungseffekt, ohne mechanischen Eigenschaften merklich zu beeinträchtigen, wie dies bei herkömmlichen Mattierungsmitteln wie Kreide oder Kieselgel zu beobachten ist.

Die bei der Herstellung der Kern-Polymerisate verwendeten Schutzkolloide haben wegen ihrer höheren Molekularmasse und größerer Raumerfüllung der Moleküle weit weniger als die niedermolekularen Emulgatoren das Bestreben, an die Oberfläche des Kunststoffes zu wandern. Hochmolekulare Schutzkolloide neigen daher weit weniger zum Ausschwitzen aus einem Formteil.

Darüber hinaus besitzen die mit den erfindungsgemäßen Partikeln modifizierten Formmassen und die daraus hergestellten Formteile die Vorteile einer verbesserten Bedruckbarkeit und sog. anti-blocking-Eigenschaften, d.h. die von den Partikeln "angerauhten" Oberflächen der Formteile haften nicht aneinander. Dieser auf Adhäsion zurückzuführende Effekt ist beispielsweise von Kunststoffolien bekannt. Erfindungsgemäße Partikel enthaltende, zu einem Stapel aufeinander geschichtete Folien lassen sich problemlos voneinander trennen, im Gegensatz zu Folien, die solche Partikel nicht enthalten.

Die Formmassen können außerdem Zusatzstoffe aller Art enthalten. Genannt seien z.B. Gleit- und Entformungsmittel, Pigmente, Flammschutzmittel, Farbstoffe, Stabilisatoren, faser- und pulverförmige Füll- und Verstärkungsmittel und Antistatika, die jeweils in den üblichen Mengen zugesetzt werden.

Die Herstellung der erfindungsgemäßen Formmassen kann nach an sich bekannten Mischverfahren z.B. durch Einarbeiten des partikelförmigen Pfropfpolymerisates in das Basismaterial bei Temperaturen oberhalb des Schmelzpunktes des Basismaterials, insbesondere bei Temperaturen von 150 bis 350°C in üblichen Mischvorrichtungen erfolgen. Aus den erfindungsgemäßen Formmassen lassen sich Formkörper mit reduziertem Oberflächenglanz (Mattigkeit) und hoher Schlagzähigkeit herstellen. Im Formkörper tritt keine Entmischung der Polymerkomponenten ein.

### Beispiele:

### Beispiel 1:

### Partikelförmiges Pfropfpolymerisat aus n-Butylacrylat (Kern) und Styrol/Acrylnitril (Schale); erfindungsgemäß, Polymerisat A

Es wurden

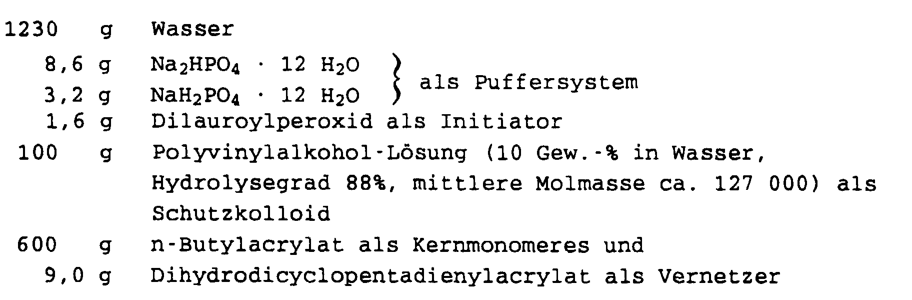

in der angegebenen Reihenfolge unter Stickstoff zusammengegeben und mit einem Hochleistungsrührer (Dissolver-Rührer, 3500 Upm, 5 cm-Zahnscheibe) 40 min lang gerührt. Gleichzeitig wurde das Gemisch allmählich auf 73°C erhitzt. Hierbei bildeten sich Monomerentröpfchen des mittleren Durchmessers von 10 µm, wie an einer Probe mikroskopisch ermittelt wurde.

Diese Dispersion wurde in einen anderen Kessel überführt und dort unter mäßigem Rühren innerhalb 2 h auf 87°C erhitzt, wobei sich das Kernpolymere (Umsatz etwa 95 %) bildete.

Anschließend wurde die Mischung unter mäßigem Rühren bei 70°C im Laufe von 10 Minuten mit einer Mischung aus

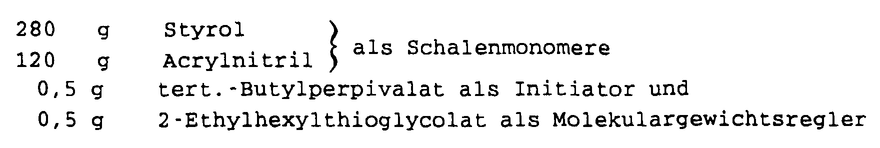

versetzt, dann 2 Stunden bei 70°C gehalten und anschließend innerhalb von 2 Stunden auf 85°C erhitzt.

Die Teilchen des so erhaltenen Pfropfpolymerisates (Typ 60 Gew.-% n-Butylacrylat, 28 Gew.-% Styrol, 12 Gew.-% Acrylnitril, vernetzt) hatten einen mittleren Teilchendurchmesser D₅₀ von 10 µm, einen Durchmesser D₁₀ von 4 µm und einen Durchmesser D₉₀ von 25 µm.

Die erhaltene Suspension wurde als solche in das Polymere eingearbeitet wie nachfolgend beschrieben.

### Beispiel 2:

### Formkörper

Ein Basismaterial B wurde mit den durch herkömmliche Emulsionspolymerisation hergestellten Polymerisaten E1 bzw. E2 wie üblich im Extruder (ZSK 30, Fa. Werner und Pfleiderer) bei 260°C innig vermischt und aufgeschmolzen. Das Polymerisat A wurde in Form seiner Dispersion kontinuierlich in diese Polymerschmelze eingetragen, und der Wasseranteil der Dispersion wurde durch Entwässerungsvorrichtungen entlang des Extruders entfernt, wonach die Schmelze extrudiert wurde. Das nach Abkühlen und Granulieren erhaltene Produkt wurde auf einer Spritzgußmaschine bei 220°C Schmelzetemperatur und 60°C Formtemperatur zu Rundscheiben von 6 cm Durchmesser und 0,2 cm Dicke bzw. Norm-Kleinstäben (siehe DIN 53453) gespritzt, welche auf ihre Eigenschaften untersucht wurden.

Bei den Polymeren handelt es sich um folgende Materialien (jeweils Gew.-%):

| | |
|---|---|
| Polymerisat A | kautschukelastische Pfropfpolymere gemäß Beispiel 1 |
| | |
| Polymerisat B | hartes thermoplastisches Copolymerisat Typ 65 % Styrol + 35 % Acrylnitril, Viskositätszahl nach DIN 53 726: 80 ml/g (0,5%ig in Dimethylformamid bei 23°C). |
| | |
| Emulsionspolymerisat E1 | kautschukelastisches Pfropfpolymeres, auf herkömmliche Weise durch Emulsionspolymerisation hergestellt. Typ 60 % n-Butylacrylat, vernetzt mit Tricyclodecenylacrylat (Kern)/30 % Styrol + 10 % Acrylnitril (Schale), mittlerer Teilchendurchmesser D₅₀ ca. 0,5 µm |
| | |
| Emulsionspolymerisat E2 | kautschukelastisches Pfropfpolymeres auf herkömmliche Weise durch Emulsionspolymerisation hergestellt. Typ 60 % Butadien (Kern)/ 28 % Styrol + 12 % Acrylnitril (Schale), mittlerer Teilchendurchmesser D₅₀ ca. 0,35 µm. |

Die Mischungsverhältnissse in den Polymermischungen sowie die Eigenschaften der aus ihren hergestellten Formkörper sind der nachstehenden Tabelle zu entnehmen.

| Versuch Nr. | Zusammensetzung der Polymermischung [Gew.-%] | | | | Kerbschlagzähigkeit¹⁾ [kJ/m²] | Lichtreflexion²⁾ [%] |
|---|---|---|---|---|---|---|
| | B | A | E1 | E2 | | |
| 1* | 50 | - | 50 | - | 20,0 | 87 |
| 2* | 50 | - | - | 50 | 18,0 | 85 |
| 3 | 50 | 5 | 45 | - | 19,6 | 12 |
| 4 | 45 | 5 | - | 45 | 18,5 | 10 |

| | | | | | | |
|---|---|---|---|---|---|---|
| ¹⁾ gemessen nach DIN 53 453 bei 23°C an Norm-Kleinstäben mit gefräster Kerbe | | | | | | |
| ²⁾ gemessen analog DIN 67530 mit Photometer Gonio GPZ, Fa. Carl Zeiss, im Winkel von 45° (Reflexion) | | | | | | |
| * zum Vergleich | | | | | | |

Man erkennt, daß diejenigen Formmassen, die ausschließlich herkömmliches Pfropfpolymerisat als schlagzäh modifizierende Komponente enthalten, eine hohe Lichtreflexion aufweisen (Versuch Nr. 1*, 2*). Demgegenüber haben die Formmassen, bei denen 10 % des herkömmlichen Pfropfpolymerisates E 1 bzw. E 2 durch die erfindungsgemäßen Pfropfpolymer-Teilchen A großen Durchmessers ersetzt ist, eine erheblich geringere Reflexion bei vergleichbarer Kerbschlagzähigkeit (Versuch Nr. 3, 4)

## Patentansprüche

1. Verfahren zur Herstellung von partikelförmigen, für die Qualitätsverbesserung von makromolekularen Basismaterialien B aus
B-1) Homocopolymerisaten des Styrols, des Methylacrylats, der (C₁-C₄-Alkyl)methacrylate und des Acrylnitrils, Copolymerisaten dieser Monomeren und weiteren Comonomeren, oder
B-2) schlagzähen Styrolcopolymeren aus ASA, ABS oder AES, oder
B-3) Polyestern, Polyamiden, Polyvinylchlorid, Polycarbonaten oder Polyoximethylen,
geeigneten Pfropfpolymerisaten durch Polymerisation eines Kernes K aus Monomeren M_{K}, die kautschukelastische Kernpolymere P_{K} bilden und Pfropfung mit einer oder mehreren Schalen S, wobei die äußere Schale Sₐ aus einem Polymeren Pₐ, gebildet aus den Monomeren Mₐ, aufgebaut ist, das mit dem Basismaterial B verträglich oder teilverträglich ist, durch Polymerisation in wäßriger Phase in Gegenwart eines radikalischen Polymerisationsinitiators, dadurch gekennzeichnet,
- daß man das Monomere oder ein Monomerengemisch M_{K} einer Feinstdispersion in Wasser unter Verwendung eines Schutzkolloids unterwirft, bis die Monomertröpfchen einen mittleren Teilchendurchmesser von 1 bis 100 µm haben,
- daß man die Monomeren M_{K} bis zu einem Umsatz über 50 % polymerisiert und
- daß man dieses die Pfropfkerne K enthaltende Gemisch durch sequentielle Zugabe der den Pfropfschalen S entsprechenden Monomeren oder Monomerengemischen Mₛ bis zum Aufbau der äußeren Schale Sₐ unter Verwendung der entsprechenden Monomeren Mₐ in an sich bekannter Weise pfropfpolymerisiert.

2. Verfahren nach Anspruch 1, dadurch gekennzeichnet, daß die Feinstdispersion durch intensives Rühren bei hoher Geschwindigkeit hergestellt wird.

3. Verfahren nach den Ansprüchen 1 bis 2, dadurch gekennzeichnet, daß als Schutzkolloid Carboxymethylcellulose, Hydroxymethylcellulose, Poly-N-vinylpyrrolidon, Polyvinylalkohol, Polyethylenoxid, Polyacrylsäure oder Poly-N-vinylimidazol verwendet wird.

4. Verfahren nach den Ansprüchen 1 bis 3, dadurch gekennzeichnet, daß als Monomere M_{K} (C₂-C₃₆-Alkyl)acrylate mitverwendet werden und die daraus gebildeten Kernpolymere P_{K} zu mindestens 50 Gew.-% aus den (C₂-C₃₆-Alkyl)acrylaten aufgebaut sind.

5. Verfahren nach den Ansprüchen 1 bis 4, dadurch gekennzeichnet, daß als Monomere Mₐ Monomere verwendet werden, die Polymere Pₐ der äußeren Schale aus Homocopolymerisaten des Styrols, des Methylacrylats, der (C₁-C₄-Alkyl)methacrylate und des Acrylnitrils oder aus Copolymerisaten dieser Monomeren und weiteren Comonomeren bilden.

## Claims

1. A process for the preparation of a particulate graft polymer which is suitable for improving the quality of macromolecular base materials B comprising
B-1) homocopolymers of styrene, of methyl acrylate, of (C₁-C₄-alkyl)methacrylates and of acrylonitrile, copolymers of these monomers and further comonomers, or
B-2) impact-modified styrene copolymers of ASA, ABS or AES, or
B-3) polyesters, polyamides, polyvinyl chloride, polycarbonates or polyoxymethylene,
by polymerization of a core K comprising monomers M_{K} which form elastomeric core polymers P_{K} and grafting with one or more shells S, the outer shell Sₐ being composed of a polymer Pₐ which is formed from the monomers Mₐ and is compatible or partly compatible with the base material B, by polymerization in the aqueous phase in the presence of a free radical polymerization initiator, wherein
- the monomer or a monomer mixture M_{K} is very finely dispersed in water using a protective colloid until the monomer droplets have a mean particle diameter of from 1 to 100 µm,
- the monomers M_{K} are polymerized to a conversion of more than 50% and
- this mixture containing the grafting cores K is subjected to graft polymerization in a manner known per se by sequential addition of the monomers or monomer mixtures Mₛ corresponding to the graft shells S until the outer shell Sₐ has been produced using the corresponding monomers Mₐ.

2. A process as claimed in claim 1, wherein the very fine dispersion is prepared by thorough stirring at high speed.

3. A process as claimed in claim 1 or 2, wherein the protective colloid used is carboxymethylcellulose, hydroxymethylcellulose, poly-N-vinylpyrrolidone, polyvinyl alcohol, polyethylene oxide, polyacrylic acid or poly-N-vinylimidazole.

4. A process as claimed in any of claims 1 to 3, wherein the monomers M_{K} present are ((C₂-C₃₆-alkyl)acrylates, and the core polymers P_{K} formed therefrom are composed of at least 50% by weight of the (C₂-C₃₆-alkyl)acrylates.

5. A process as claimed in any of claims 1 to 4, wherein the monomers Mₐ used are monomers which form polymers Pₐ of the outer shell comprising homocopolymers of styrene, of methyl acrylate, of (C₁-C₄-alkyl)methacrylates and of acrylonitrile or comprising copolymers of these monomers with further comonomers.

## Revendications

1. Procédé de préparation de polymères greffés particulaires, convenant pour l'amélioration qualitative de matériaux de base macromoléculaires B à base de
B-1) homocopolymères de styrène, d'acrylate de méthyle, de méthacrylates d'alkyle en C₁-C₄ et d'acrylonitrile, copolymères de ces monomères et autres comonomères, ou
B-2) copolymères de styrène résistants aux chocs à base d'ASA, ABS ou AES, ou
B-3) polyesters, polyamides, poly(chlorure de vinyle), polycarbonates ou polyoxyméthylène,
par polymérisation d'un noyau K de monomères M_{K}, qui forment un polymère noyau caoutchouteux P_{K}, et greffage d'une ou plusieurs enveloppes S, l'enveloppe extérieure Sₐ étant constituée d'un polymère Pₐ formé à partir des monomères Mₐ, lequel est compatible ou partiellement compatible avec le matériau de base B, par polymérisation en phase aqueuse en présence d'un initiateur de polymérisation radicalaire, caractérisé en ce que
- l'on soumet le monomère ou un mélange de monomères M_{K} à une fine dispersion dans de l'eau, en utilisant un colloïde de protection, jusqu'à ce que les gouttelettes de monomère présentent un diamètre particulaire moyen de 1 à 100 µm,
- on polymérise les monomères M_{K} jusqu'à un taux de conversion de plus de 50% et
- on soumet à une polymérisation de greffage, de manière en soi connue, ce mélange contenant les noyaux de greffage K par addition séquentielle des monomères ou d'un mélange de monomères Mₛ correspondants contenant les enveloppes de greffage S jusqu'à constitution de l'enveloppe extérieure Sₐ, au moyen des monomères Mₐ correspondants.

2. Procédé selon la revendication 1, caractérisé en ce que la fine dispersion est préparée par brassage intensif à grande vitesse.

3. Procédé selon la revendication 1 ou 2, caractérisé en ce que l'on utilise, en tant que colloïde de protection, de la carboxyméthylcellulose, de l'hydroxyméthylcellulose, de la poly-N-vinylpyrrolidone, un poly(alcool vinylique), du poly(oxyde d'éthylène), du poly(acide acrylique) ou de la poly-N-vinylimidazole.

4. Procédé selon les revendications 1 à 3, caractérisé en ce que l'on utilise simultanément comme monomères M_{K} des acrylates d'alkyle en C₂-C₃₆ et que le polymère noyau ainsi formé est constitué d'au moins 50% en poids des acrylates d'alkyle en C₂-C₃₆.

5. Procédé selon les revendications 1 à 4, caractérisé en ce que l'on utilise comme monomères Mₐ des monomères qui forment les polymères Pₐ de l'enveloppe extérieure à partir d'homocopolymères de styrène, d'acrylate de méthyle, de méthacrylates d'alkyle en C₁-C₄ et d'acrylonitrile, ou de copolymères de ces monomères et d'autres comonomères.
